# EUROPÄISCHE PATENTSCHRIFT

(11) **EP 3 004 695 B1**
(45) Veröffentlichungstag und Bekanntmachung des Hinweises auf die Patenterteilung: **25.11.2020**
(21) Anmeldenummer: 14729577.8
(22) Anmeldetag: 10.05.2014
(51) Int. Cl.: F16J 9/20, F16J 9/14

(54) **KOLBENRING**
PISTON RING
SEGMENT DE PISTON

(30) Priorität: 08.06.2013 DE 102013009645
(43) Veröffentlichungstag der Anmeldung: 13.04.2016
(73) Patentinhaber: Federal-Mogul Burscheid GmbH, 51399 Burscheid (DE)
(72) Erfinder: SCHULTE-SASSE, Thomas, 42929 Wermelskirchen (DE)
(74) Vertreter: Döpp, Ludger
(86) Internationale Anmeldenummer: PCT/DE2014/000243
(87) Internationale Veröffentlichungsnummer: WO 2014/194875

(56) Entgegenhaltungen:
- WO-A1-2008/000206
- DE-A1- 3 441 919
- DE-A1- 3 511 851
- US-A- 2 459 395
- US-A- 2 591 920

## Beschreibung

Die Erfindung betrifft einen Kolbenring gemäß gattungsbildendem Teil des ersten Anspruchs.

Die EP 1 608 899 B1 offenbart einen Kolbenring, mit einem einen Stoß bildenden Schlitz einer Lauffläche, einer inneren Umfangsfläche sowie dazwischen verlaufenden oberen und unteren Flanken, wobei im Bereich der inneren Umfangsfläche eine inkonstante Querschnittsstörung vorgesehen ist, die, in Umfangsrichtung gesehen, im Bereich des Stoßes größer ausgebildet ist als im dem Stoß diametral gegenüberliegenden Bereich. Der Kolbenring weist eine Wandstärke auf, die in Umfangsrichtung variiert, wobei im Bereich des Stoßes die Wandstärke kleiner ausgebildet ist als im dem Stoß diametral gegenüberliegenden Bereich.

Der DE 35 11 851 A1 ist ein geschlitzter, in einer Ringnut am unteren triebwerksseitigen Ende einer Tauchkolbens einer Viertaktbrennkraftmaschine eingesetzter und mit ringsum gleichmäßiger Vorspannkraft gegen die Zylinderbohrungswand angepresster Ölabstreifring zu entnehmen, der die gattungsgemäßen Merkmale des ersten Anspruchs aufweist.

Durch Querschnittsstörungen des Kolbenrings, bspw. durch konstante oder inkonstante Innenfasen und/oder -winkel, soll der technische Effekt erzielt werden, dass der Kolbenring im motorischen Einsatzbereich mit der unteren Laufflächenkante an der Zylinderwand und mit der Innenkante an der unteren Flanke anliegt.

Die in dieser Druckschrift aufgezeigte Lösung ist technisch aufwendig und somit für den Masseneinsatz zu kostspielig.

Durch die US 2,591,920 ist ein Kolbenring bekannt geworden, beinhaltend einen Grundkörper, eine Lauffläche, eine innere Umfangsfläche sowie dazwischen verlaufende obere und unter Flanken. Der Grundkörper ist mit einem Stoß versehen und weist, insbesondere im Bereich seiner inneren Umfangsfläche eine Querschnittsstörung auf. Die Lauffläche ist in Umfangsrichtung gesehen mit sich verändernden Laufflächenkonizitäten versehen.

Der Erfindung liegt die Aufgabe zugrunde, einen Kolbenring bereitzustellen, der gegenüber dem Stand der Technik einfacher herstellbar ist, und darüber hinaus auch zu einem geringen Ölverbrauch beiträgt.

Diese Aufgabe wird dadurch gelöst, dass im Bereich des Stoßes eine geringere Laufflächenkonizität (α) und/oder -balligkeit als im diametral gegenüberliegenden Ringrücken gegeben ist und sich die Laufflächenkonizität (α) und/oder -balligkeit, ausgehend vom Stoß in beiden Umfangsrichtungen der Lauffläche (2), konstant erhöht, wobei die Laufflächenkonizitäten (α) und/oder -balligkeiten der Lauffläche (2), über den Umfang gesehen, viel größer ₐₗₛ ein maximaler Twistwinkel des Kolbenrings eingestellt werden, und dass durch an den Twistwinkel angepasste Laufflächenkonizitäten (a) und/oder -balligkeiten, auf den Umfang des Kolbenrings bezogen, eine gleichmäßige Pivotpunktlage (7) erreicht wird.

Gleichmäßige Laufflächenkonizitäten oder -balligkeiten führen bei Kolbenringen mit Innenfasen oder geometrisch anderen Querschnittsschwächungen zu ungleichmäßigen Pivotpunktlagen auf dem Umfang und damit auch zu nicht gewolltem Funktionsverhalten. Dies kann dazu führen, dass der hydrodynamische Druckaufbau an lokalen Stellen des Kolbenrings ungleichmäßig stattfindet, oder im unangenehmsten Fall ganz zusammenbricht, wodurch Effekte, wie Ölschieben oder dergleichen, auftreten können.

Querschnittsstörungen können sowohl an der inneren als auch der äußeren Umfangsfläche vorgesehen werden. Die geometrische Form der Querschnittsstörung kann hierbei durch Fasen oder Winkel gebildet sein. Der Fachmann wird für den jeweiligen Anwendungsfall die geeignete Art der Querschnittsstörung auswählen.

Unter dem Begriff "Pivotpunkt" versteht der Kolbenringfachmann den radial am äußersten gelegenen Punkt der Balligkeit/Konizität (Scheitelpunkt) oder auch den maximalen Punkt des Laufflächenprofils oder auch den Umkehrpunkt des Laufflächenprofils im Einbauzustand des Kolbenrings. Um ein optimalesÖlabstreifverhalten sicherzustellen, sollte der Pivotpunkt, bezogen auf den jeweiligen Kolbenring, in seinem axial untersten Bereich angesiedelt sein. Je nach Ausgestaltung der Lauffläche eines Kolbenrings (Konizität, Balligkeit, Ausnehmung) ist es schwierig, über die gleiche Pivotpunktlage, den Umfang des Kolbenrings gesehen, zu realisieren.

Mit dem Erfindungsgegenstand wird eine an den Twistwinkel des jeweiligen Kolbenrings angepasste Laufflächenkonizität oder -balligkeit und somit eine gleichmäßige Pivotpunktlage über den gesamten Umfang erreicht. Die Pivotpunktlage steuert - wie vorab beschrieben - entscheidend das Funktionsverhalten eines Kolbenrings im Motor. Gleichzeitig hat die Größe der Laufflächenkonizität einen hohen Einfluss auf das Dichtungsverhalten unter Gasdruck im Motorbetrieb.

Mit dem Erfindungsgegenstand wird die Gasangriffsfläche an der Lauffläche stark minimiert, so dass - auf den Umfang des Kolbenrings bezogen - eine Optimierung der notwendigen Konizitäten gegeben ist.

Von besonderem Vorteil ist, dass die sich verändernden Laufflächenkonizitäten in Abhängigkeit von der geometrischen Form der Querschnittsstörung des Kolbenrings einstellbar sind.

Ausgehend vom Stoß erhöhen sich die Laufflächenkonizitäten in beiden Umfangsrichtungen hierbei konstant oder inkonstant. Dies hängt von dem jeweiligen Einsatzfall des Kolbenrings ab.

Der Erfindungsgegenstand ist anhand eines Ausführungsbeispiels in der Zeichnung dargestellt und wie folgt beschrieben. Es zeigen
- Fig. 1 und 2: beispielhafte Darstellungen des Standes der Technik.
- Fig. 3: Prinzipskizze eines erfindungsgemäßen Kolbenrings im Querschnitt.

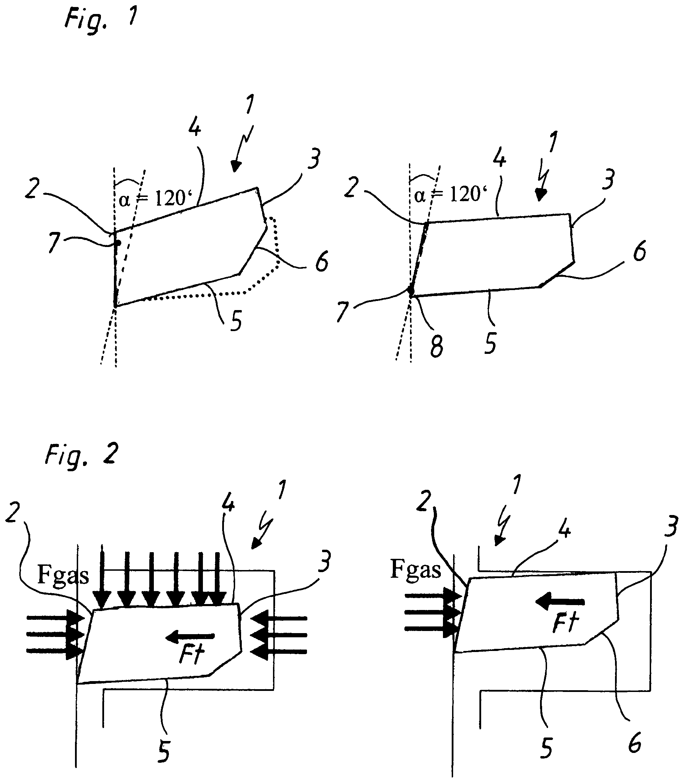

Die Fig. 1 und 2 zeigen praktische Beispiele des gegenwärtigen Standes der Technik. Dargestellt ist ein Kolbenring 1, der eine Lauffläche 2, eine innere Umfangsfläche 3 sowie dazwischen verlaufende obere und untere Flanken 4, 5 beinhaltet. Nicht dargestellt ist der Stoß des Kolbenrings 1. Hier wird die Fig. 1 der EP 1 608 899 B1 mit einbezogen, in welcher der Stoß des Kolbenrings erkennbar ist. Der in den Fig. 1 und 2 dargestellte Kolbenring 1 weist eine Querschnittsstörung 6 in Form einer Innenfase auf. Bedingt durch diese Querschnittsstörung 6 vertwistet der Kolbenring 1 in Umfangsrichtung. Da der Kolbenring 1 nicht geschlossen ist, vielmehr einen Stoß aufweist, verändert sich der Twistwinkel in Umfangsrichtung.

Fig. 1 zeigt, dass bei angenommenem Twistwinkel α von 120, sich der Pivotpunkt 7, über den Umfang gesehen, verändert. Im linken Bild der Fig. 1 würde der Pivotpunkt 7 im Ringrückenbereich oberhalb der Mitte des Kolbenrings 1 und im Bereich des Ringstoßes etwa im Bereich der Abstreifkante 8 angesiedelt sein.

Fig. 2 zeigt den Einfluss des Gasdruckes (Fgas) auf einen in Fig. 1 dargestellten Kolbenring. Theoretisch angenommen ist im linken Bild der Fig. 2 ein ausgeglichener Zustand über den gesamten Umfang des Kolbenrings 1 gegeben. Im praktischen Einsatz ist der Gasdruck (Fgas) über den Umfang des Kolbenrings 1 gesehen, jedoch größer als die selbigem entgegenwirkende radiale Spannkraft (Ft) des Kolbenrings 1.

Wie bereits dargestellt, führen gleichmäßige Laufflächenkonizitäten oder - balligkeiten, über den Umfang gesehen, bei Kolbenringen 1 mit Querschnittsschwächungen zu ungleichmäßigen Pivotpunktlagen 7 und damit zu einem nicht gewollten instabilen Funktionsverhalten. Dies kann dazu führen, dass der hydrodynamische Druckaufbau an lokalen Stellen des Kolbenringumfangs ungleichmäßig stattfindet, wodurch Effekte, wie Ölschieben oder dergleichen, auftreten können.

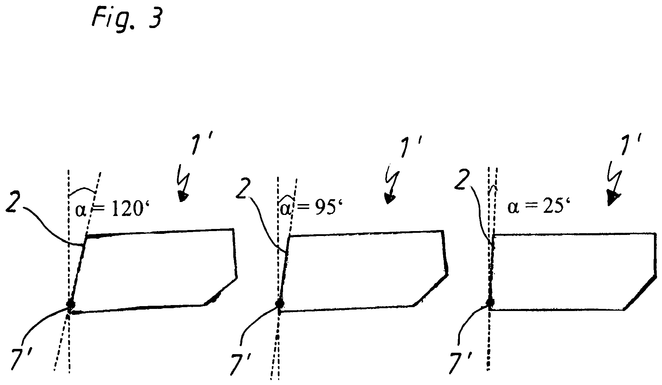

Fig. 3 zeigt den Erfindungsgegenstand. Zur Erreichung einer stets gleichbleibenden Pivotpunktlage 7' - über den Umfang des Kolbenrings 1' gesehen - wird die Lauffläche 2 des Kolbenrings 1' in Umfangsrichtung mit sich verändernden Laufflächenkonizitäten α versehen, dergestalt, dass im Bereich des nicht dargestellten Stoßes (rechtes Bild der Fig. 3) eine geringere Laufflächenkonizität α als im diametral gegenüberliegenden Ringrückenbereich (linker Teil der Fig. 3) gegeben ist. Ausgehend vom rechten Bild der Fig. 3 in Richtung des Ringrückens (linkes Bild der Fig. 3) kann sich die Laufflächenkonizität α konstant oder inkonstant verändern. In Fig. 3 ist dargestellt, dass sich die Laufflächenkonizität α vom Ringstoß in Richtung des Ringrückens konstant, d.h. kontinuierlich verändert. Die Laufflächenkoniziäten α der Lauffläche 2 werden somit abweichend vom Stand der Technik, über den Umfang gesehen, viel größer als der maximale Twistwinkel eingestellt. Durch an den Twistwinkel angepasste Laufflächenkonizitäten α oder -balligkeiten wird auf den Umfang des Kolbenrings 1' bezogen eine gleichmäßige Pivotpunktlage 7 erreicht. Die Pivotpunktlage 7' steuert entscheidend das Funktionsverhalten des Kolbenrings 1' im Motor. Gleichzeitig hat die Größe der Laufflächenkonizität α einen hohen Einfluss auf das Dichtungsverhalten unter Gasdruck im Motorbetrieb. Mit dem Erfindungsgegenstand wird die Gasangriffsfläche an der Lauffläche 2 stark minimiert, so dass - auf den gesamten Umfang des Kolbenrings 1' bezogen - eine Optimierung der notwendigen Laufflächenkonizität erreicht wird.

## Patentansprüche

1. Kolbenring, mit einem Grundkörper, der eine Lauffläche (2), eine innere Umfangsfläche (3) sowie dazwischen verlaufende obere (4) und untere Flanken (5) beinhaltet, wobei der Grundkörper mit einem Stoß versehen ist und insbesondere im Bereich seiner inneren Umfangsfläche (3) eine Querschnittsstörung (6) in Form einer Innenfase oder eines Innenwinkels aufweist, wobei zur Erzeugung einer gleichmäßigen Pivotpunktlage die Lauffläche (2), in Umfangsrichtung gesehen, mit sich verändernden Laufflächenkonizitäten (α) und/oder -balligkeiten versehen ist, wobei im Bereich des Stoßes eine geringere Laufflächenkonizität (α) und/oder -balligkeit als im diametral gegenüberliegenden Ringrücken gegeben ist und sich die Laufflächenkonizität (α) und/oder -balligkeit, ausgehend vom Stoß in beiden Umfangsrichtungen der Lauffläche (2), konstant erhöht, **dadurch gekennzeichnet, dass** die Laufflächenkonizitäten (α) und/oder -balligkeiten der Lauffläche (2), über den Umfang gesehen, viel größer als ein maximaler Twistwinkel des Kolbenrings eingestellt werden, und dass durch an den Twistwinkel angepasste Laufflächenkonizitäten (α) und/oder -balligkeiten, auf den Umfang des Kolbenrings bezogen, eine gleichmäßige Pivotpunktlage (7) erreicht wird.

## Claims

1. A piston ring comprising a base body, which comprises a bearing surface (2), an inner circumferential surface (3) as well as an upper (4) and a lower flanks (5) extending between them, wherein the base body is provided with a joint and comprises a cross section disturbance (6) in form of an internal bevel or an internal angle in particular in the area of the inner circumferential surface (3) of the base body, wherein the bearing surface (2), seen in the peripheral direction, is provided with changing bearing surface conicities (α) and/or convexities for generating a uniform pivot point position, wherein a smaller bearing surface conicity (α) and/or convexity is given in the area of the joint than the one in the diametrically opposed ring back and the bearing surface conicity (α) and/or convexity constantly increases from the joint in both peripheral directions of the bearing surface (2), **characterized in that** the bearing surface conicities (α) and/or convexities of the bearing surface (2), seen over the circumference, are fixed to be much greater than a maximum twist angle of the piston ring, and that a uniform pivot point position (7) with regard to the circumference of the piston ring is achieved by means of bearing surface conicities (α) and/or convexities adapted to the twist angle.

## Revendications

1. Segment de piston ayant un corps de base qui comprend une surface de roulement (2), une surface circonférentielle intérieure (3) ainsi qu'un flanc supérieur (4) et inférieur (5), qui s'étendent entre celles-ci, dans lequel le corps de base est muni d'un joint et il comprend une irrégularité de section transversale (6) en forme d'un chanfrein intérieur ou d'un angle intérieur notamment dans la zone de la surface circonférentielle intérieure (3) du corps de base, dans lequel la surface de roulement (2), vue dans la direction circonférentielle, est munie de conicités de surface de roulement (α) et/ou de bombements de surface de roulement changeants pour générer une position de point pivot uniforme, dans lequel il y a une conicité de surface de roulement (α) plus faible et/ou un bombement de surface de roulement plus faible dans la zone du joint que celle/celui, qui existe dans le dos du segment diamétralement opposé et la conicité de surface de roulement (α) et/ou le bombement de surface de roulement augmente de manière constante à partir du joint dans les deux directions circonférentielles de la surface de roulement (2), **caractérisé en ce que** les conicités de surface de roulement (α) et/ou les bombements de surface de roulement de la surface de roulement (2), vus sur la circonférence, sont fixés de sorte qu'ils sont beaucoup plus grands qu'un angle de torsion maximal du segment de piston, et qu'une position de point pivot uniforme (7) par rapport à la circonférence du segment de piston est obtenue par moyen de conicités de surface de roulement (α) et/ou de bombements de surface de roulement adaptés à l'angle de torsion.
